# EUROPEAN PATENT APPLICATION

(11) **EP 3 757 740 A1**
(43) Date of publication of application: **30.12.2020**
(21) Application number: 19215571.1
(22) Date of filing: 12.12.2019
(51) Int. Cl.: G06F 3/0481

(54) **METHOD AND DEVICE FOR DISPLAYING A PROMPTING MESSAGE, MOBILE TERMINAL AND STORAGE MEDIUM**

(30) Priority: 27.06.2019 CN 201910570526
(71) Applicant: Beijing Xiaomi Mobile Software Co., Ltd., Beijing 100085 (CN)
(72) Inventor: XIA, Yuhang, Beijing, Beijing 100085 (CN); ZHANG, Yihong, Beijing, Beijing 100085 (CN); HAO, Shaohua, Beijing, Beijing 100085 (CN)
(74) Representative: dompatent von Kreisler Selting Werner - Partnerschaft von Patent- und Rechtsanwälten mbB

(57) **Abstract**

Provided are a method and device for displaying a prompting message, a mobile terminal and a storage medium. The method may include that: when there is a prompting message to be displayed, a first mark is dynamically displayed on a desktop; after an input operation for the first mark is detected, the desktop is switched to a prompting page; and the prompting message is displayed on the prompting page. Therefore, displaying of the prompting message is optimized, a user may be enabled to view the prompting message more timely, and a user experience is improved.

## Description

### TECHNICAL FIELD

The present disclosure generally relates to the technical field of electronics, and more particularly, to a method and device for displaying a prompting message, a mobile terminal and a storage medium.

### BACKGROUND

Along with development of electronic technologies, more and more service can be provided by a mobile terminal. For example, a mobile terminal may be used for basic communications, socialization, shopping and reservation of various types of online or offline service, and may also be used for reading news and the like.

### SUMMARY

The present disclosure provides a method and device for displaying a prompting message, a mobile terminal and a storage medium.

According to a first aspect of embodiments of the present disclosure, a method for displaying a prompting message is provided, which may include that:
when there is a prompting message to be displayed, a first mark is dynamically displayed on a desktop;
after an input operation for the first mark is detected, the desktop is switched to a prompting page; and
the prompting message is displayed on the prompting page.

Based on the solution, the operation that the first mark is dynamically displayed on the desktop when there is the prompting message to be displayed may include that:
when there is the prompting message to be displayed, an extension and contraction change is made to the first mark on the desktop in a predetermined direction.

Based on the solution, the predetermined direction may be:
a first direction, which is a direction from the prompting page to the desktop;
   or,
a second direction, which is a direction from the desktop to the prompting page.

Based on the solution, when the extension and contraction change is made to the first mark in the first direction, the first mark may be displayed at an edge position of the desktop.

Based on the solution, when the extension and contraction change is made to the first mark in the second direction, the first mark may be displayed in a middle region of the desktop.

Based on the solution, the method may further include that:
when there is no prompting message to be displayed, a second mark is statically displayed on the desktop.

Based on the solution, the prompting message may include prompting messages for one or more applications.

Based on the solution, the method may further include that:
when a display state of dynamically displaying the first mark meets a dynamic display stopping condition under a screen control strategy, dynamic displaying of the first mark is stopped.

Based on the solution, the operation that the first mark is dynamically displayed on the desktop when there is the prompting message to be displayed may further include that:
when there is the prompting message to be displayed, the first mark is dynamically displayed on the desktop at an interval of a preset duration according to a dynamic display triggering condition under the screen control strategy.

Based on the solution, the method may further include that:
when an event to be processed or a service situation update meeting the screen control strategy is detected, the prompting message to be displayed is generated.

According to a second aspect of the embodiments of the present disclosure, a device for displaying a prompting message is provided, which may include:
a first displaying module, configured to, when there is a prompting message to be displayed, dynamically display a first mark on a desktop;
a switching module, configured to, after an input operation for the first mark is detected, switch the desktop to a prompting page; and
a second displaying module, configured to display the prompting message on the prompting page.

Based on the solution, the first displaying module may specifically be configured to, when there is the prompting message to be displayed, make an extension and contraction change to the first mark on the desktop in a predetermined direction.

Based on the solution, the predetermined direction may be:
a first direction, which is a direction from the prompting page to the desktop;
   or,
a second direction, which is a direction from the desktop to the prompting page.

Based on the solution, when the extension and contraction change is made to the first mark in the first direction, the first mark may be displayed at an edge position of the desktop.

Based on the solution, when the extension and contraction change is made to the first mark in the second direction, the first mark may be displayed in a middle region of the desktop.

Based on the solution, the device may further include:
a third displaying module, configured to, when there is no prompting message to be displayed, statically display a second mark on the desktop.

Based on the solution, the prompting message may include prompting messages for one or more applications.

Based on the solution, the device may further include:
the first displaying module, configured to, when a display state of dynamically displaying the first mark meets a dynamic display stopping condition under a screen control strategy, stop dynamic displaying of the first mark.

Based on the solution, the first displaying module may be configured to, when there is the prompting message to be displayed, dynamically display the first mark on the desktop at an interval of a preset duration according to a dynamic display triggering condition under the screen control strategy.

Based on the solution, the device may further include:
a generation module, configured to, when an event to be processed or a service situation update meeting the screen control strategy is detected, generate the prompting message to be displayed.

According to a third aspect of the embodiments of the present application, a mobile terminal is provided, which may include:
a display, configured for displaying;
a processor; and
a memory configured to store an instruction executable for the processor,
wherein the processor may be configured to execute the executable instruction to control displaying of the display, and execute the method for displaying a prompting message provided in any abovementioned technical solution.

According to a fourth aspect of the embodiments of the present application, a non-transitory computer-readable storage medium is provided, an instruction in the storage medium, when executed by a processor of a mobile terminal, enables the mobile terminal to execute the method for displaying a prompting message provided in any abovementioned technical solution.

The technical solutions provided by embodiments of the present disclosure may have the following beneficial effects.

When there is a prompting message to be displayed, a first mark is dynamically displayed on a desktop. On the first aspect, a prompting page is entered after an input operation for the first mark is detected, and then each prompting message to be displayed may be displayed on the prompting page and may be seen without switching to each application, which, compared with direct displaying at each application icon, can simplify user operations. On the second aspect, the first mark is dynamically displayed on the desktop, so that a good prompting effect may be achieved through a dynamic effect and that it is more or less guaranteed to be seen immediately. On the third aspect, the first mark is displayed on the desktop, which is equivalent to notifying a user of the prompting message to be displayed, thereby reducing missed prompting messages, avoiding the condition in the related art that a user is required to enter a system message page to know about whether there is a prompting message to be viewed or not, and further improving a user experience.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1A is a flow chart illustrating a method for displaying a prompting message according to some embodiments.
FIG. 1B is a flow chart illustrating a method for displaying a prompting message according to some embodiments.
FIG. 2 is a schematic diagram illustrating a display effect of a desktop according to some embodiments.
FIG. 3A is a schematic diagram illustrating a dynamic display effect of a first mark according to some embodiments.
FIG. 3B is a schematic diagram illustrating a static display effect of a second mark according to some embodiments.
FIG. 4A is a schematic diagram illustrating a static display effect of a second mark according to some embodiments.
FIG. 4B is a schematic diagram illustrating a dynamic display effect of a first mark according to some embodiments.
FIG. 5 is a structure diagram of a device for displaying a prompting message according to some embodiments.
FIG. 6 is a structure diagram of a mobile terminal according to some embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Terms used in the present disclosure are only adopted for the purpose of describing specific embodiments and not intended to limit the present disclosure. "A/an" and "the" in a singular form in the present disclosure and the appended claims are also intended to include a plural form, unless other meanings are clearly denoted throughout the present disclosure. It is also to be understood that term "and/or" used in the present disclosure refers to and includes one or any or all possible combinations of multiple associated items that are listed.

It is to be understood that, although terms "first", "second", "third" and the like may be adopted to describe various information in the present disclosure, the information should not be limited to these terms. These terms are only adopted to distinguish the information of the same type. For example, without departing from the scope of the present disclosure, first information may also be called second information and, similarly, second information may also be called first information. For example, the term "if" used here may be explained as "while" or "when" or "responsive to determining", which depends on the context.

A commonly used prompting manner is that if various applications are installed in a mobile terminal and when any one of these applications receives new messages, the number of messages of the application to be read is presented by a red number as a mark. Such a prompting manner sometimes cannot attract a user's attention to the new messages and brings a less clean desktop to the electronic device. For some users, it appears unfriendly to them to directly mark the number of messages to be read at an application icon.

Another manner of prompting is that a prompt is given through a system information bar. In this case, a user is required to pull down the system information bar where a notification center is presented, and multiple system messages to be read are presented in the notification center in an overlapping manner. In such a prompting manner, a user may completely forget reading messages sometimes and miss important messages accordingly.

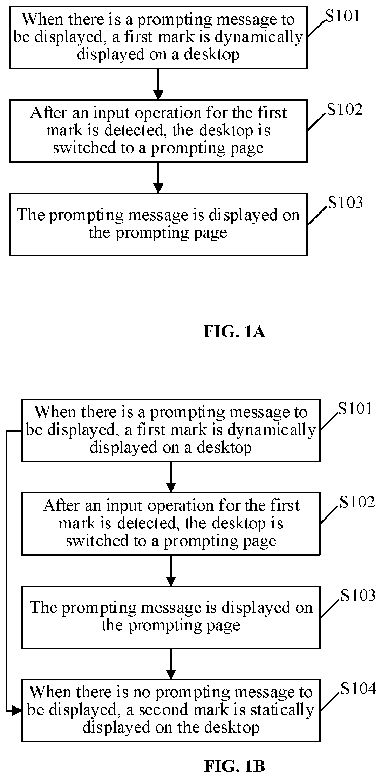

As shown in FIG. 1A, an embodiment provides a method for displaying a prompting message, which may include the following operations.

In operation S101, when there is a prompting message to be displayed, a first mark is dynamically displayed on a desktop.

In operation S102, after an input operation for the first mark is detected, the desktop is switched to a prompting page.

In operation S103, the prompting message is displayed on the prompting page.

The method for displaying a prompting message as provided in the embodiment may be applied to various terminal devices, for example, a mobile terminal. The mobile terminal may include, but not limited to, a mobile phone, a pad or a wearable device, etc.

In the embodiment, the prompting message to be displayed may be a prompting message needed to be viewed by a user.

The prompting message may include, but not limited to, at least one of:
a calendar prompt, for example, a meeting calendar and a travel calendar;
an email prompt, for reminding that there is a new email to be viewed;
an instant message prompt, for reminding that there is a new instant message to be viewed;
a prompt of a dynamic update of reserved service, for reminding a user of a latest situation of the reserved service, wherein the reserved service may be determined based on a user setting or may be an important message automatically recognized based on an operating system, for example, the reserved service may include repayment service of a bank, online shopping service which is adding goods to a shopping cart, and etc., and the reserved service may also include express receiving service and/or express sending service, and an update service of a reservation application, for example, a reminder service of a stock application about volatility of a specific stock or index.

In a word, in the embodiment, the prompting message may remind a user of all contents or specific content needed to be viewed, which is only exemplarily described above and may be set according to a user requirement during specific implementation.

The desktop may be a page for displaying a file icon, and/or a folder icon, and/or a tool icon of a service provision tool. For example, the service provision tool may include, but not limited to, a tool capable of providing local service or cloud service, such as an application or an applet.

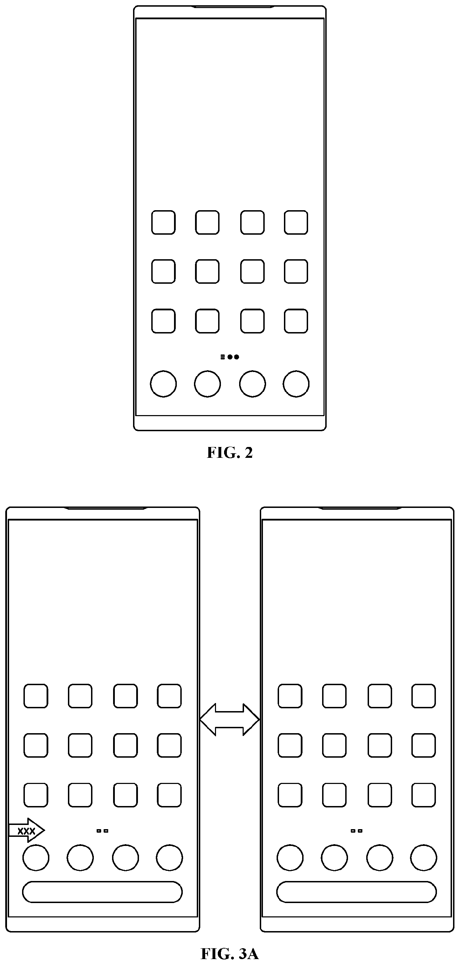

FIG. 2 shows a desktop where multiple application icons are displayed in parallel.

The first mark may be dynamically displayed on the desktop when there is a prompting message to be displayed, and the first mark may include a first icon and/or a first word. Under some circumstances, the first mark may solely be an icon or a word, or may be a combination of the icon and the word. For example, "new situation" is displayed as the first icon.

In the embodiment, dynamically displaying the first mark refers to that a display form and/or a display effect parameter of the first mark may change during displaying of the first mark, and thus the effect of the displaying may be switched between at least two different display effects.

For example, if the first mark is the first icon and when the first icon is dynamically displayed, the first icon has different display forms at different times, or, the first icon has the same display form but different display colors, different display brightness or different display transparency at different times, and thus a dynamic effect may be presented.

In the embodiment, the first mark is displayed at a blank position where the tool icon of the service provision tool such as an application icon is not displayed. An application icon on the desktop is usually statically displayed while the first mark is dynamically displayed, the attention of a user may be attracted by the dynamic effect, so that the user may timely operate the first mark and timely view the prompting message needed to be viewed.

In operation S102, upon when an input operation of a user for the first mark is detected, a display screen of the mobile terminal is switched from the desktop to the prompting page.

Various prompting messages needed to be viewed by the user are displayed on the prompting page, and the prompting messages may be displayed as a prompting card at different positions of the prompting page. For example, various service cards for providing reminder service are displayed on the prompting page, or, message cards which remind the user of viewing prompting messages are directly displayed.

Upon when an upward and downward sliding operation is detected on the prompting page, the prompting page may be slided up and down, and thus display cards displayed at different positions of the prompting page may be displayed on the screen.

In some embodiments, upon when a triggering operation over a display card is detected, the mobile terminal may, based on the triggering operation, enter a page of a service provision tool, such as an application or applet, associated with the prompting message displayed through the display card, so as to make it convenient for the user to process the page. Upon when the triggering operation is detected, it means that processing has been completed and it is unnecessary to display the prompting message anymore, the mobile terminal then may automatically remove the prompting message from prompting messages to be displayed, and the prompting message may be not displayed on the prompting page anymore.

In some other embodiments, the service card may be a message needed to be viewed by a user, for example, a short message, an instant message or an email content. Upon when the short message, the instant message or the email content is displayed on the display screen, the corresponding prompting message may be removed from the prompting messages to be displayed, and may be not displayed on the prompting page anymore.

In some embodiments, the operating system of the mobile terminal may send a notification to the service provision tool such as a local application or applet through an interface such as an Application Programming Interface (API), so that the service provision tool may know that the corresponding message has been viewed or processed. For example, upon when the prompting page indicates that an instant message needed to be viewed has been viewed, a notification is sent to an application corresponding to the instant message to notify the application of that the instant message has been viewed, then the application may remove a mark indicative of the message to be processed or to be displayed. Therefore, repeated prompting is reduced, and intelligence of the device and user satisfaction may be improved.

FIG. 3A is a schematic diagram illustrating a dynamic display effect of a first mark that is dynamically displayed. It may be seen from FIG. 3A that icons on a right side of the desktop are displayed or not displayed by extension and contraction changes, and the dynamic display effect is also achieved by switching between displaying and no displaying.

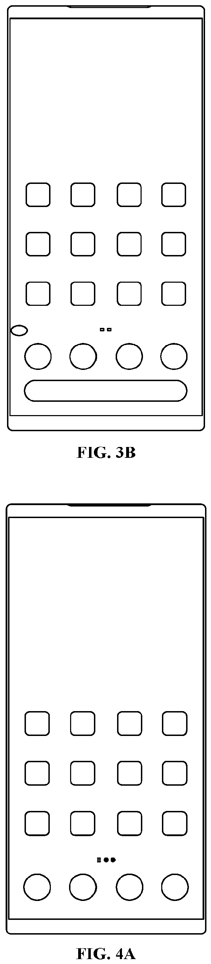

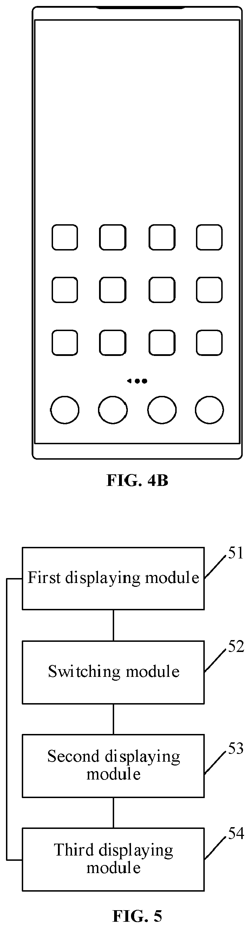

FIG. 3B is a schematic diagram illustrating a display effect of a second mark that is statically displayed. It may be seen from comparison between FIG. 3 and FIG. 4 that the first mark is different from the second mark.

FIG. 4A shows the second mark that is statically displayed. The second mark in FIG. 4A is one of three black dots displayed between round icons and rectangular icons.

FIG. 4B shows the first mark that is dynamically displayed and indicates a direction. The second mark in FIG. 4B is a small triangle displayed between round icons and rectangular icons, and a direction that the small triangle transversely points to is a switching direction from the desktop to the prompting page.

In some embodiments, the first mark indicative of direction may indicate the direction by marking the status of the first mark or indicate the direction through a dynamic effect. For example, when the first mark is one or more arrows pointing to the same direction, the direction that the one or more arrows point to is consistent with the direction from the prompting page to the desktop. That is, the direction that the one or more arrows point to is opposite to the direction from the desktop to the prompting page. For another example, when the first mark is not an icon such as an arrow and/or a word, a changed direction of the dynamic effect is the indicated direction; and when the prompting page is on a left side of the desktop, the dynamic effect is presented on a left side of the first mark and then gradually moves to a right side. In such case, a changed direction of the dynamic effect is consistent with the direction from the prompting page to the desktop.

Accordingly, the user is told through the first mark how to operate, and thus user experience is further improved. Therefore, in some embodiments, the operation that the first mark is dynamically displayed on the desktop may include at least one of the following operations: when the prompting page is on a first side of the desktop, the first mark pointing to a second side of the desktop is displayed on the desktop, the second side being a side opposite to the first side.

Specifically, the icon may be a directional icon, and the icon may point to the desktop from the prompting page or may point to the prompting page from the desktop, so that a user may determine a relationship between the prompting page and the desktop according to the directional icon to know how to operate the device to switch the device from the desktop to the prompting page.

In some embodiments, at least one of the first mark and the second mark may be displayed at an edge position of the desktop or a middle position of the desktop.

The edge position of the desktop may include, but not limited to, a left edge of the desktop, a right edge of the desktop, a bottom edge of the desktop or a top edge of the desktop. For example, a region at a predetermined distance away from an edge line of the rectangular desktop is set to be an edge region, and the edge position of the desktop may be any position in the edge region of the desktop.

The middle position of the desktop may include, but not limited to, a position outside a region with the edge position.

In some embodiments, the state that the first mark is displayed at the middle position of the desktop may include that the first mark is displayed in a dock bar of the desktop.

In the embodiment, the dock bar may be a display region at a bottom of the desktop, and the display region may be divided from other regions above the bottom through a dividing line. In terms of displaying, upon when the display region other than the region of the desktop is swiped, the display screen may be switched to different desktops, while the dock bar is not switched in the display region other than the dock bar.

A plurality of display positions are set in the dock bar, and a tool icon of a service tool may be displayed at a display position. For example, an application icon may be displayed at a display position.

In some embodiments, when the extension and contraction change is made to the first mark in the first direction, the first mark is displayed at the edge position of the desktop.

When the extension and contraction change is made to the first mark in the second direction, the first mark is displayed in a middle region of the desktop.

In some embodiments, S101 may include that:
when there is a prompting message to be displayed, an extension and contraction change is made to the first mark on the desktop in a predetermined direction.

If the extension and contraction change is made to the first mark, the first mark is different at least in a display length in the predetermined direction at different time. For example, in a case that the first mark is one or more arrows and that the extension and contraction change is made to the one or more arrows in the predetermined direction, a length of the one or more arrows may change in the predetermined direction.

Here, the first mark not only has an effect of reminding the user that there is a prompting message to be displayed but also can prompt the user how to trigger the mobile terminal to switch from the desktop to the prompting page.

The predetermined direction may include any one of two opposite directions.

Specifically, the predetermined direction is:
a first direction, which is a direction from the prompting page to the desktop;
   or,
a second direction, which is a direction from the desktop to the prompting page.

In an example that the prompting page is at an edge of the desktop, the arrow shown in FIG. 3A is a first mark pointing to the first direction, and the small triangle shown in FIG. 4B is a first mark pointing to the second direction.

In some embodiments, the first direction may be a sliding direction of a sliding operation of triggering the electronic device to switch from the desktop to the prompting page.

For example, rightward extension and contraction of the arrow icon acting as the first mark pointing to the first direction is equivalent to prompting the user to slide rightward to switch the mobile terminal from the desktop to the prompting page.

In some embodiments, the method further may include that:
a position relationship between the prompting page and the desktop is determined; and
the predetermined direction is determined according to the position relationship.

In some embodiments, when the mobile terminal displays the desktop, the prompting page is hidden at different positions of the desktop. In the embodiment, the predetermined direction may be determined according to the position relationship.

The position relationship matches with positions of the desktop and the prompting page in a switching queue.

For example, a first queue is set in the mobile terminal, and the first queue stores information of different desktop pages of the desktop. A second queue is also set in the mobile terminal, and the second queue stores an identifier of the desktop and an identifier of the prompting page. Upon when the input operation over the first mark is detected, the mobile terminal may perform display switching according to the second queue. In the second queue, when the identifier of the prompting page is on the left of the identifier of the desktop, a rightward sliding operation may switch the mobile terminal from the desktop to the prompting page, and in such case, the predetermined direction is rightward. When the identifier of the prompting page is on the right of the identifier of the desktop, a leftward sliding operation may switch the mobile terminal from the desktop to the prompting page, and in such case, the predetermined direction is leftward.

In some embodiments, the method further may include that:
a display position of the first mark is determined according to the position relationship; and
S101 may further include that:
when there is a prompting message to be displayed, the first mark is dynamically displayed at the display position on the desktop.

In the embodiment, the display position of the first mark is also related to the position relationship. For example, when the prompting page is on the left of the desktop, the first mark may be displayed at the right edge of the desktop; and when the prompting page is at a bottom edge of the desktop, the first mark is displayed at the bottom of the desktop.

In the embodiment, the display position of the first mark is related to the position relationship, so that high adaptability to the habit of the user is achieved, and display friendliness of the mobile terminal is improved.

In some embodiments, there may be one or multiple prompting pages.

One such prompting page may be used to display prompting messages for one or more applications. When prompting messages of multiple applications are displayed on the same prompting page, the number of prompting pages is reduced and user operations are simplified, so that the user may completely view various prompting messages on the same prompting page and thus missed prompting messages are reduced.

In some embodiments, based on a prompting-message-based prompting method, when there is no prompting message to be displayed, a mark related to the prompting message may be not displayed, so that changes in desktop displaying are reduced, and high compatibility with the conventional art is achieved.

As shown in FIG. 1B, the method may further include the following operation.

In operation S104, when there is no prompting message to be displayed, a second mark is statically displayed on the desktop.

Here, the second mark may be the same as the first mark; or, the second mark may be different from the first mark.

Even though the second mark is the same as the first mark, the first mark is dynamically displayed while the second mark is statically displayed, so that the user may distinguish whether there is a prompting message needed to be viewed or not according to different display effects, i.e., dynamic displaying and static displaying.

In some embodiments, if S104 is executed after entering a prompting page and then exiting from the prompting page, it may be considered that there is no prompting message to be displayed, so that the second mark is statically displayed after the prompting page is switched back to the desktop.

In some other embodiments, when there are many prompting messages on the prompting page, since the prompting page is neither completely displayed under the first view nor swiped based on input of a user, not all prompting messages are displayed even though the user enters the prompting page, that is, there is still some prompting messages to be displayed even after exiting from the prompting page. In such case, it is still necessary to keep displaying the first mark or keep dynamically displaying the first mark. For example, the prompting page may be divided into multiple types.

One type is a communication message prompting page, a communication message including, but not limited to, a short message, an email and an instant message.

The other type is a service message prompting page, a service message including, but not limited to, express service, shopping service, calendar service and the like.

Since there are multiple prompting pages, different prompting pages have different position relationships with the desktop.

In some embodiments, a prompting page may correspond to a first mark and a second mark.

In some embodiments, the position relationship may also be determined according to a user setting. For example, a setting page may include a prompting page, and the position relationship may be set on the setting page.

In some embodiments, the operation that the display position of the first mark is determined according to the position relationship may include that: when the prompting page is on a predetermined side of the desktop, an edge of the predetermined side of the desktop is determined as the display position of the first mark, the predetermined side being the left side or right side of the desktop.

For example, the operation that the display position of the first mark is determined according to the position relationship may include at least one of the following operations:
when the prompting page is on the first side of the desktop, an edge of the first side of the desktop is determined as the display position of the first mark; and
when the prompting page is on the second side of the desktop, an edge of the second side of the desktop is determined as the display position of the first mark, the second side being opposite to the first side.

In the embodiment, the prompting page may be on or the first mark and/or the second mark may be set on any two sides of the desktop.

In some embodiments, there may be one prompting page for displaying prompting messages of multiple applications.

In some embodiments, the method further may include that:
when a state of dynamically displaying the first mark meets a dynamic display stopping condition under a screen control strategy, the first mark is switched to be statically displayed,
the form of the first mark is different from the form of the second mark.

In some embodiments, the first mark may be kept dynamically displayed, but for reducing power consumption, the first mark is not required to be kept dynamically displayed when it is determined that the user has been reminded. Therefore, when the display state of the first mark meets the dynamic display stopping condition under the screen control strategy, dynamic displaying of the first mark is stopped and the first mark is switched to be statically displayed.

For example, the number of times of extension and contraction of the first mark reaches a predetermined number of times. For example, a duration of dynamic displaying of the first mark reaches a preset duration.

However, the first mark and the second mark are different marks, and even though the first mark is not dynamically displayed. A user may determine that there is a prompting message to be displayed through the first mark different from the second mark.

In some embodiments, when the state of dynamically displaying the first mark meets the dynamic display stopping condition under the screen control strategy and the input operation for the first mark is not received, the first mark is statically displayed,

In some embodiments, S101 further may include that:
when there is a prompting message to be displayed, the first mark is dynamically displayed on the desktop at an interval of a preset duration according to a dynamic display triggering condition under the screen control strategy.

In some embodiments, after displaying of the first mark is stopped, a prompting message to be displayed may also be continued to be generated, or, it is necessary to further remind the user of processing as soon as possible. In the embodiment, the first mark may be dynamically displayed again at the interval of the preset duration according to the dynamic display triggering condition under the screen control strategy. For example, the first mark is periodically dynamically displayed. In some other embodiments, the first mark is displayed at intervals of unequal durations.

In some embodiments, the method further may include that: when an event to be processed or a service situation update meeting the screen control strategy is detected, the prompting message to be displayed is generated.

The event to be processed may be an event to be processed determined according to input of a user in a calendar application or a note application, for example, a travel event, a meeting event or a phone event.

The service situation update may include price reduction of a specific commodity or service to be purchased in shopping service, etc.

In a word, in the embodiment, the event or service to be processed in the prompting message may be automatically set according to the input of a user or determined by an operating system or cloud service based on data analysis.

For example, if there is an account to which a user pays special attention in a social application, then a prompting message is generated only when there is a message coming from the account, rather than prompting messages to be displayed are generated in response to new messages sent from all accounts.

For another example, frequencies of using applications installed in the mobile terminal are different, prompting messages to be displayed on the prompting page are generated only when messages are pushed for the applications with the first N using frequencies, while, for messages which are pushed for the applications with using frequencies lower than the first N using frequencies, no prompting messages are generated.

As shown in FIG. 5, an embodiment provides a device for displaying a prompting message, which may include:
a first displaying module 51, configured to, when there is a prompting message to be displayed, dynamically display a first mark on a desktop;
a switching module 52, configured to, after an input operation for the first mark is detected, switch the desktop to a prompting page; and
a second displaying module 53, configured to display the prompting message on the prompting page.

In some embodiments, the first displaying module 51, the switching module 52 and the second displaying module 53 may be program modules, and the program modules may be executed by a processor to implement the operations implemented by any abovementioned module.

In some embodiments, the first displaying module 51, the switching module 52 and the second displaying module 53 may be combined software and hardware modules, the combined software and hardware modules may include, but not limited to, various programmable arrays, and the programmable arrays may include a Field Programmable Gate Array (FPGA) or a complex programmable array.

In some other embodiments, the first displaying module 51, the switching module 52 and the second displaying module 53 may include pure hardware modules such as an Application Specific Integrated Circuit (ASIC).

In some embodiments, the first displaying module 51 is specifically configured to, when there is the prompting message to be displayed, make an extension and contraction change to the first mark on the desktop in a predetermined direction.

In some embodiments, the predetermined direction may be: a first direction, the first direction being a direction from the prompting page to the desktop; or, a second direction, the second direction being a direction from the desktop to the prompting page.

When the extension and contraction change is made to the first mark in the first direction, the first mark may be displayed at an edge position of the desktop.

When the extension and contraction change is made to the first mark in the second direction, the first mark may bee displayed in a middle region of the desktop.

In some embodiments, the prompting message may include prompting messages for one or more applications.

In some embodiments, the device further may include a third displaying module 54, configured to, when there is no prompting message to be displayed, statically display a second mark on the desktop.

In some embodiments, the device further may include:
the first displaying module 51, configured to, when a state of dynamically displaying the first mark meets a dynamic display stopping condition under a screen control strategy, stop dynamic displaying the first mark.

In some embodiments, the device further may include:
a generation module, configured to, when an event to be processed or a service situation update meeting the screen control strategy is detected, generate the prompting message to be displayed.

Some examples will be provided below in combination with any abovementioned embodiment.

### Example 1

A prompt of a new message is displayed on a main screen, the new message may be from minusonescreenview or new home, and the prompt plays a guiding role. For example, when the minusonescreenview is on a left side of the main screen, namely content of the minusonescreenview may be presented by sliding the main screen rightwards, the prompt of the new message in the minusonescreenview may be displayed at a left border of the screen to prompt that the message is from the minusonescreenview, thereby bringing convenience to the user for reading.

The prompt of the new message may be the first mark. The minusonescreenview and the new home are the prompting pages.

The prompt plays the guiding role, and may prompt the user how to operate the mobile terminal through directivity or a dynamic effect so as to switch the main screen of the mobile terminal from the desktop to the minusonescreenview or the new home.

Tools such as a smart phone assistant are set in the mobile terminal such as a mobile phone, and when a user is needed to process an event or there is a service situation update, a new situation is actively notified to the user, thereby improving timeliness of service and preventing the user from missing any important event.

### Example 2

There is an icon of the minusonescreenview at a position of a sliding indicator of the desktop. When there is no update for the content of the minusonescreenview, the icon may be presented as a static icon. The position of the sliding indicator is one type of the first mark.

When there is an update for the content, the icon may be changed to a dynamic arrow to slide leftwards for three times. If a user does not timely enter the minusonescreenview, a left arrow is kept displayed and will be not changed back to the original static icon until the user enters the minusonescreenview.

A unified screen control strategy may be adopted for the content of the prompting message. For example, only an important message is prompted. If there are multiple prompts in a period time, prompting is made only once.

For example, when a state of service changes, a Content Provider (CP) may notify a client of such a change by broadcasting or pushing a message, and the client, after receiving the message, may control a sliding indicator on the desktop through a controller to change a static icon into a dynamic left arrow.

After the user enters the minusonescreenview, the left arrow is reset as the static icon, and when a prompting message is received next time, the static icon is changed back to the dynamic left arrow.

For example, in a case that a user has a meeting 15 minutes later, or that an express is being distributed or that price of a commodity in a shopping cart is reduced, a small arrow may be presented at a leftmost position at the sliding indicator in the first view of the desktop and slides leftwards for three times to prompt the user, and the user, after receiving such a prompt, enters the minusonescreenview. In such case, a service card may be presented if there is an update, and meanwhile, a text is also presented in the display region. Therefore, timeliness of service information is ensured, and important information, if updated, can reach the user in the first time.

Under some circumstances, there is a bottom board, with three letters "new situation" appearing when there is a prompt thereon, on a leftmost side of the desktop at middle positions of folders in a first row and the dock bar of the desktop. The "new situation" is another type of the first mark.

Some embodiments provide a mobile terminal, which may include:
a display, configured for displaying;
a processor; and
a memory configured to store an instruction executable for the processor,
wherein the processor is configured to execute the executable instruction to control displaying of the display, and may execute the method for displaying a prompting message provided in any abovementioned technical solution.

The display may be any display screen, for example, a Liquid Crystal Display (LCD) screen, an Organic Light-Emitting Diode (OLED) display screen, an electronic ink display screen or a projection display screen.

The processor may be any device with an information processing function, for example, a central processing unit, a microprocessor, a Digital Signal Processor (DSP), a programmable array or an ASIC.

The processor may be connected with the display and the memory through a bus (for example, an integrated circuit bus or a peripheral connecting bus).

The memory may include, but not limited to, a device including a storage medium, for example, a Random Access Memory (RAM), a Read-Only Memory (ROM) or a flash memory.

The mobile terminal may include, but not limited to, a mobile phone, a pad or a wearable device, etc.

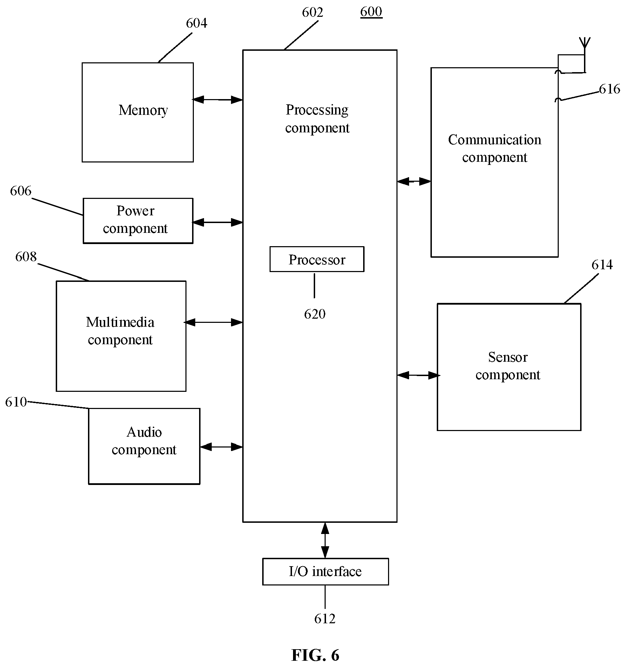

FIG. 6 is a block diagram of a terminal 600 according to some embodiments. For example, the terminal 600 may be a mobile phone, a computer, a digital broadcast terminal, a messaging device, a gaming console, a tablet, a medical device, exercise equipment, a personal digital assistant and the like.

Referring to FIG. 6, the terminal 600 may include one or more of the following components: a processing component 602, a memory 604, a power component 606, a multimedia component 608, an audio component 610, an Input/Output (I/O) interface 612, a sensor component 614, and a communication component 616.

The processing component 602 typically is configured to control overall operations of the terminal 600, such as the operations associated with display, telephone calls, data communications, camera operations, and recording operations. The processing component 602 may include one or more processors 620 to execute instructions to perform all or part of the operations in the abovementioned method. Moreover, the processing component 602 may include one or more modules which facilitate interaction between the processing component 602 and the other components. For instance, the processing component 602 may include a multimedia module to facilitate interaction between the multimedia component 608 and the processing component 602.

The memory 604 is configured to store various types of data to support the operation of the device 600. Examples of such data include instructions for any application programs or methods operated on the terminal 600, contact data, phonebook data, messages, pictures, video, etc. The memory 604 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 606 is configured to provide power for various components of the terminal 600. The power component 606 may include a power management system, one or more power supplies, and other components associated with generation, management and distribution of power for the terminal 600.

The multimedia component 608 may include a screen providing an output interface between the terminal 600 and a user. In some embodiments, the screen may include an LCD and a Touch Panel (TP). If the screen includes the TP, the screen may be implemented as a touch screen to receive an input signal from the user. The TP may include one or more touch sensors to sense touches, swipes and gestures on the TP. The touch sensors may not only sense a boundary of a touch or swipe action but also detect a duration and pressure associated with the touch or swipe action. In some embodiments, the multimedia component 608 may include a front camera and/or a rear camera. The front camera and/or the rear camera may receive external multimedia data when the device 600 is in an operation mode, such as a photographing mode or a video mode. Each of the front camera and the rear camera may be a fixed optical lens system or have focusing and optical zooming capabilities.

The audio component 610 is configured to output and/or input an audio signal. For example, the audio component 610 may include a Microphone (MIC), and the MIC is configured to receive an external audio signal when the terminal 600 is in the operation mode, such as a call mode, a recording mode and a voice recognition mode. The received audio signal may further be stored in the memory 604 or sent through the communication component 616. In some embodiments, the audio component 610 further may include a speaker configured to output the audio signal.

The I/O interface 612 is configured to provide an interface between the processing component 602 and a peripheral interface module, and the peripheral interface module may be a keyboard, a click wheel, a button and the like. The button may include, but not limited to: a home button, a volume button, a starting button and a locking button.

The sensor component 614 may include one or more sensors configured to provide status assessment in various aspects for the terminal 600. For instance, the sensor component 614 may detect an on/off status of the device 600 and relative positioning of components, such as a display and small keyboard of the terminal 600, and the sensor component 614 may further detect a change in a position of the terminal 600 or a component of the terminal 600, presence or absence of contact between the user and the terminal 600, orientation or acceleration/deceleration of the terminal 600 and a change in temperature of the terminal 600. The sensor component 614 may include a proximity sensor configured to detect presence of an object nearby without any physical contact. The sensor component 614 may also include a light sensor, such as a Complementary Metal Oxide Semiconductor (CMOS) or Charge Coupled Device (CCD) image sensor, configured for use in an imaging APP. In some embodiments, the sensor component 614 may also include an acceleration sensor, a gyroscope sensor, a magnetic sensor, a pressure sensor or a temperature sensor.

The communication component 616 is configured to facilitate wired or wireless communication between the terminal 600 and other equipment. The terminal 600 may access a communication-standard-based wireless network, such as a Wireless Fidelity (WiFi) network, a 2nd-Generation (2G) or 3rd-Generation (3G) network, 4G, 5G or any further generation of a communication network or a combination thereof. In some embodiments, the communication component 616 receives a broadcast signal or broadcast associated information from an external broadcast management system through a broadcast channel. In some embodiments, the communication component 616 further may include a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology and another technology.

In some embodiments, the terminal 600 may be implemented by one or more ASICs, DSPs, Digital Signal Processing Devices (DSPDs), Programmable Logic Devices (PLDs), FPGAs, controllers, micro-controllers, microprocessors or other electronic components, and is configured to execute the abovementioned method.

In some embodiments, there is also provided a non-transitory computer-readable storage medium having stored an instruction thereon, such as the memory 604 including an instruction, and the instruction may be executed by the processor 620 of the terminal 600 to implement the abovementioned method. For example, the non-transitory computer-readable storage medium may be a ROM, a RAM, a Compact Disc Read-Only Memory (CD-ROM), a magnetic tape, a floppy disc, an optical data storage device and the like.

A non-transitory computer-readable storage medium can have instructions stored thereon for execution by a processor of a mobile terminal to enable the mobile terminal to implement the operations of the abovementioned methods for displaying a prompting message, such as the methods shown in the figures.

Other implementation solutions of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for displaying a prompting message, comprising:
when there is a prompting message to be displayed, dynamically displaying a first mark on a desktop;
after an input operation for the first mark is detected, switching the desktop to a prompting page; and
displaying the prompting message on the prompting page.

2. The method of claim 1, wherein dynamically displaying the first mark on the desktop when there is the prompting message to be displayed comprises:
when there is the prompting message to be displayed, making an extension and contraction change to the first mark on the desktop in a predetermined direction.

3. The method of claim 2, wherein the predetermined direction is:
a first direction, which is a direction from the prompting page to the desktop; or,
a second direction, which is a direction from the desktop to the prompting page.

4. The method of claim 3, wherein, when the extension and contraction change is made to the first mark in the first direction, the first mark is displayed at an edge position of the desktop or in a middle region of the desktop.

5. The method of claim 1, further comprising:
when there is no prompting message to be displayed, statically displaying a second mark on the desktop.

6. The method of claim 1, wherein the prompting message comprises prompting messages for one or more applications.

7. The method of any one of claims 1-6, further comprising:
when a state of dynamically displaying the first mark meets a dynamic display stopping condition under a screen control strategy, stopping dynamically displaying the first mark.

8. The method of claim 7, wherein dynamically displaying the first mark on the desktop when there is the prompting message to be displayed further comprises:
when there is the prompting message to be displayed, dynamically displaying the first mark on the desktop at an interval of a preset duration according to a dynamic display triggering condition under the screen control strategy.

9. The method of any one of claims 1-6, further comprising:
when an event to be processed or a service situation update meeting a screen control strategy is detected, generating the prompting message to be displayed.

10. A device for displaying a prompting message, comprising:
a first displaying module, configured to, when there is a prompting message to be displayed, dynamically display a first mark on a desktop;
a switching module, configured to, after an input operation for the first mark is detected, switch the desktop to a prompting page; and
a second displaying module, configured to display the prompting message on the prompting page.

11. The device of claim 10, wherein the first displaying module is configured to, when there is the prompting message to be displayed, make an extension and contraction change to the first mark on the desktop in a predetermined direction.

12. The device of claim 11, wherein the predetermined direction is:
a first direction, which is a direction from the prompting page to the desktop; or,
a second direction, which is a direction from the desktop to the prompting page.

13. The device of claim 12, wherein, when the extension and contraction change is made to the first mark in the first direction, the first mark is displayed at an edge position of the desktop or in a middle region of the desktop.

14. The device of claim 10, further comprising:
a third displaying module, configured to, when there is no prompting message to be displayed, statically display a second mark on the desktop.

15. A mobile terminal, comprising:
a display, configured for displaying;
a processor; and
a memory configured to store an instruction executable for the processor,
wherein the processor is configured to execute the instruction to control displaying of the display, and execute the method of any one of claims 1-9.
